# EUROPEAN PATENT APPLICATION

(11) **EP 2 113 295 A1**
(43) Date of publication of application: **04.11.2009**
(21) Application number: 08165557.3
(22) Date of filing: 30.09.2008
(51) Int. Cl.: B01D 53/04

(54) **Method and filter for removal of ammonia from air**

(30) Priority: 29.04.2008 PL 38507208
(71) Applicant: Politechnika Lubelska, 20-219 Lublin (PL)
(72) Inventor: Wasag, Henryk, 20-510 Lublin (PL); Pawlowski, Kucjan, 20-027 Lublin (PL)
(74) Representative: Kaminski, Piotr

(57) **Abstract**

The invention relates to a method and filter for removal of ammonia from air.

The method is **characterised in that** it involves directing of ammonia contaminated air towards the layer if fibrous ion exchange material (3) or ammonia contaminated air is passed through a gap between two layers of fibrous ion exchange material (3) and the layer of fibrous ion exchange material is continuously or periodically regenerated by acid solution.

Filter for removal of ammonia from air consists of the chamber (2) where there is a layer of fibrous ion exchange material (2) and which has an inlet (1) and outlet (4) ports. In the lower part of the chamber (2) there is a container (5) for regenerating acid solution with a pump (6) for delivering acid though a pipe (7) to upper parts of fibrous ion exchange material (3) and acid while flowing down to container (5) regenerates the fibrous ion exchange material (3)

## Description

The present invention relates to a method and filter for removal of ammonia from air.

Air pollution caused by offensive-odour substances is one on the most important problems from ecology point of view. Presence of offensive odours in the environment creates serious nuisance. Ammonia is one of the most often occurring odour-producing pollutant.

So far known and applied devices and technologies aimed at removing odours from air comprise wet cleaners, sorption methods, chemical methods, biological and thermic methods. These methods can be applied for air purification in large scale and in place where offensive odours are produced. Only and solely sorption methods are universal and can be utilised in various air deodorisation systems. Majority of these methods are based on the use of filtering inserts with differently prepared active carbon and other additives.

In Japanese patent 62262742 chemically activated active carbon fibres are formed in shape of honeycomb which was shown to allow for effective removal of ammonia and hydrogen sulphide from air.

Japanese patent 63119769 demonstrates that even better effects of air deodorisation were obtained when a mixture of active carbon and various additives, such as malic acid and iron salts were used.

Russian patent 865353 shows that the efficiency of active carbon acting as a sorbent for odorous impurities of air can be increased by placing the filtering insert in electric field.

In the examples given so far all filtering inserts are disposable and after a certain period of use require replacement.

Partially this problem was solved by a solution presented in Japanese patent 50002667, where the active carbon filtering insert is subjected to regeneration and reactivation by use of sulphuric acid. In practice, especially in large scale, the limiting factor in application of this method is the necessity of use of relatively high temperature (185-200°C) during the regeneration process.

Easier way for sorbent regeneration was presented in American patent 5797979. In the described method, depending on the kind of air pollutant removed, regeneration process is carried out in room temperature or at 95 °C, what proves to recover around 90 % of the ionite exchange capacity. The serious drawback of this method is that the air is only partially purified of unwanted substances.

Efficiency of filters based on ion exchangers was increased by use of method described in Russian patent 787364, where a layer of finely milled ionite was applied. Problems with ionite regeneration and high air flow resistance caused by a layer of finely milled ionite are major drawbacks of this method.

The essence of the method according to this invention is that involves directing of ammonia contaminated air towards the layer if fibrous ion exchange material or ammonia contaminated air is passed through a gap between two layers of fibrous ion exchange material and the layer of fibrous ion exchange material is continuously or periodically regenerated by acid solution.

The essence of the filter for removal of ammonia from air which consist of a chamber where there is a layer of fibrous ion exchange material is that the chamber with the layer of ion exchange material has an inlet and outlet ports and in the lower part of the chamber there is a container for regenerating acid solution with a pump for delivering acid through a pipe to upper parts of ion exchange material and the acid by flowing down regenerates the fibrous ion exchange material. Filter according to invention is made as a frame filter or contact filter.

Beneficial effect of this invention is that the filtering inserts made from fibrous ionites ensure deep air purification. Thanks to excellent kinetic properties of ionites used, the speed of ion exchange was between 100 and 1000 times higher as compared to classing granulated ionites. Filtering inserts can be easily and effectively regenerated even without stopping the filter operation. In addition, filters made from fibrous ion exchange materials are characterised by very low purified air flow resistance, and hence they can be easily installed in already existing ventilation systems.

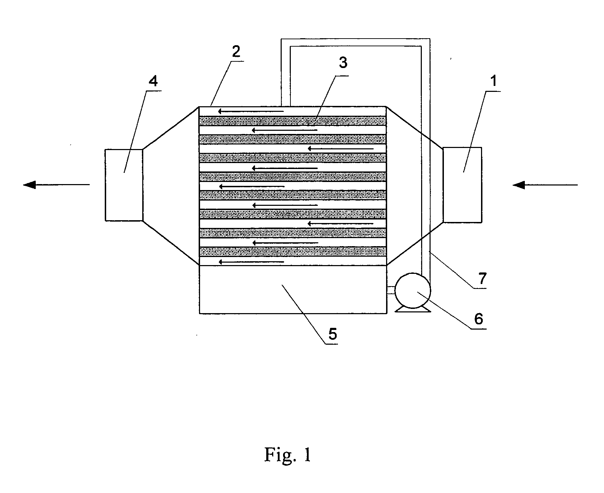

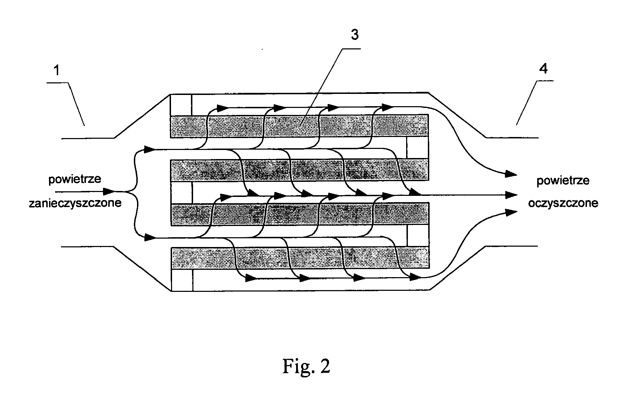

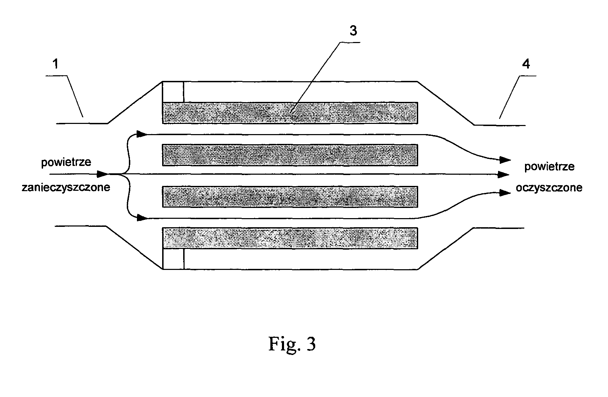

The invention is demonstrated in example shown in drawing, where fig. 1 presents the general view of the filter, fig. 2 shows in diagram the flow of purified air through a frame filter, fig.3 shows the flow of air through the contact filter.

### Example 1.

Ventilation air coming from pig farm, containing 85 mg NH₃/m³ was directed at the speed of 0,1 m/s to a frame filter containing fibrous ionite Fiban K-1. The ionite filter had surface of filtration of 1 m² 2x0,5 m² where the thickness of the filtering ionite layer was 6 mm. The ammonia contents at the outlet of the filter was below 2 mg/m³. By this method the fibrous ionite contained over 30 g NH₃/h.

The ionite regeneration was performed periodically every hour by use of 5% H₂SO₄ which was delivered for 5 minutes in the quantity of 500 cm³. Acid solution delivered to ionite through the holes in the upper edge of the frame was flowing down the ionite to container below the frames, while the pH of the acid solution was continuously measured. As soon as the measured pH of the acid solution exceeded value 2, the whole acid solution in the container, in the volume of 20 dm³ , was neutralised by use of ammonia solution. The recovered solution was used as mineral fertiliser.

### Example 2.

Ventilation air coming from poultry farm, containing 62 mg NH₃/m³ was directed at the speed of 500 m³/h to a slotted filter containing fibrous ionite Fiban AK-22. The slotted ionite filter had contact surface of 2 m² 2x1 m² while the thickness of the ionite layer was 3 mm. The ammonia contents at the outlet of the filter was below 5 mg/m³. By this method the fibrous ionite contained over 28,5 g NH₃/h.

The ionite regeneration was performed periodically every hour with use of 5% solution of H₂SO₄ which was delivered for 10 minutes in the quantity of 1000 cm³. Acid solution was uniformly delivered to upper parts of ionite and then flowed down the ionite to a container below, where the pH of the acid solution was continuously measured. As soon as the measured pH of the acid solution exceeded value 2, the whole acid solution collected in the container, in the volume of 25 dm³ , was neutralised by use of ammonia solution. The recovered solution was used as mineral fertiliser.

The polluted air flows in the filter through inlet port 1 and then flows into chamber 2 with fibrous ion exchange material 3 and while flowing through fibrous ion exchange material 3 or while flowing in direction parallel to fibrous ion exchange material 3, it only washes the layer of material 3 and the purified air flows out through outlet port 4. The layers of fibrous ion exchange material 3 present in the filter chamber 2 are continuously or periodically regenerated by use of acid, which is delivered from the container 5 through a pipe 7 by a pump 6 to upper parts of fibrous ion exchange material 3 and while flowing down it regenerates the layer of fibrous ion exchange material 3 and then returns to container 5, where it is replaced every certain period of time.

## Claims

1. The method for removal of ammonia from air **characterised in that** it involves directing of ammonia contaminated air towards the layer if fibrous ion exchange material (3) or ammonia contaminated air is passed through a gap between two layers of fibrous ion exchange material (3) and the layer of fibrous ion exchange material is continuously or periodically regenerated by acid solution.

2. Filter for removal of ammonia from air consisting of a chamber where there is a layer of ion exchange material **characterised in that** the chamber (2) with the layer of fibrous ion exchange material (3) has an inlet (1) and outlet (4) ports and in the lower part of the chamber (2) there is a container (5) for regenerating acid solution with a pump (6) for delivering acid though a pipe (7) to upper parts of fibrous ion exchange material (3) and acid while flowing down to container (5) regenerates the fibrous ion exchange material (3)

3. Filter according to claim 2 **characterised in that** it is made as a frame filter or contact filter.
